(19) **Europäisches Patentamt / European Patent Office / Office européen des brevets**

(11) **EP 3 286 938 B1**

(12) **FASCICULE DE BREVET EUROPEEN**

(45) Date de publication et mention de la délivrance du brevet:
**22.08.2018 Bulletin 2018/34**

(21) Numéro de dépôt: **16733640.3**

(22) Date de dépôt: **27.05.2016**

(51) Int Cl.:
**H04W 4/06** *(2009.01)*  **H04W 4/70** *(2018.01)*
**H04W 4/00** *(2018.01)*

(86) Numéro de dépôt international:
**PCT/FR2016/051267**

(87) Numéro de publication internationale:
**WO 2016/193592 (08.12.2016 Gazette 2016/49)**

(54) **PROCÉDÉS D'ÉMISSION ET DE RÉCEPTION D'UN SIGNAL DE DIFFUSION COMPORTANT UN SIGNAL PILOTE ET UN SIGNAL D'INFORMATION**

VERFAHREN ZUM SENDEN UND EMPFANGEN EINES RUNDFUNKSIGNALS MIT EINEM STEUERSIGNAL UND EINEM INFORMATIONSSIGNAL

METHODS FOR TRANSMITTING AND RECEIVING A BROADCAST SIGNAL COMPRISING A CONTROL SIGNAL AND AN INFORMATION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2015 FR 1554890**

(43) Date de publication de la demande:
**28.02.2018 Bulletin 2018/09**

(73) Titulaire: **SIGFOX**
**31670 Labège (FR)**

(72) Inventeurs:
- **FOURTET, Christophe**
  **82170 Pompignan (FR)**
- **ZIRPHILE, Lionel**
  **31520 Ramonville Saint Agne (FR)**

(74) Mandataire: **Ipside**
**6, Impasse Michel Labrousse**
**31100 Toulouse (FR)**

(56) Documents cités:
**WO-A1-2015/043779     US-A1- 2012 322 440**
**US-A1- 2013 165 060**

Printed by Jouve, 75001 PARIS (FR)

**Description**

## DOMAINE TECHNIQUE

La présente invention appartient au domaine des systèmes de communication sans fil, et concerne plus particulièrement un procédé d'émission de signaux de diffusion par un groupe de stations de base d'un réseau d'accès à destination de terminaux, ainsi qu'un procédé de réception desdits signaux de diffusion.

## ÉTAT DE LA TECHNIQUE

La présente invention trouve une application particulièrement avantageuse, bien que nullement limitative, dans les systèmes de communication sans fil à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux, à destination du réseau d'accès, est de largeur fréquentielle inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglo-saxonne).

Dans un tel système de communication sans fil UNB, les échanges de données sont essentiellement monodirectionnels, en l'occurrence sur un lien montant entre des terminaux et un réseau d'accès dudit système.

Les terminaux émettent des messages montants qui sont collectés par des stations de base du réseau d'accès, sans avoir à s'associer préalablement à une ou plusieurs stations de base du réseau d'accès. En d'autres termes, les messages montants émis par un terminal ne sont pas destinés à une station de base spécifique du réseau d'accès, et le terminal émet ses messages montants en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages montants. La complexité repose sur le réseau d'accès, qui doit être capable de recevoir des messages montants pouvant être émis à des instants arbitraires et sur des fréquences centrales arbitraires. Chaque station de base du réseau d'accès reçoit des messages montants des différents terminaux qui sont à sa portée.

Un tel mode de fonctionnement, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant du réseau d'accès vers les terminaux.

En particulier, il peut être avantageux d'émettre des signaux de diffusion, globale ou de groupe (respectivement « broadcast » ou « multicast » dans la littérature anglo-saxonne), à destination des terminaux. Notamment, plusieurs bandes fréquentielles peuvent être possibles pour l'émission des messages montants, par exemple associées respectivement à des régions géographiques différentes pouvant être soumises à des contraintes réglementaires différentes. L'émission de signaux de diffusion pourrait alors permettre aux terminaux d'identifier la bande fréquentielle du lien montant dans la région géographique dans laquelle ils se trouvent, et ce avant d'émettre des messages montants dans une bande fréquentielle non prévue à cet effet. Par exemple, il serait possible d'émettre les signaux de diffusion dans la bande fréquentielle du lien montant ou dans une bande fréquentielle présentant un écart fréquentiel prédéfini par rapport à la bande fréquentielle du lien montant.

De tels signaux de diffusion pourraient également être mis en oeuvre pour émettre tout type d'information pouvant être utile pour tous les terminaux, ou pour un grand nombre d'entre eux.

Des exemples de signaux de diffusion sont décrits, dans le contexte d'un système de communication sans fil LTE (acronyme anglo-saxon pour « Long Term Evolution »), par le document WO 2015/043779 A1.

Toutefois, dans un système de communications sans fil UNB, la réception des signaux de diffusion doit pouvoir être réalisée de façon simple et économique, pour limiter le coût de fabrication des terminaux. En particulier, il est souhaitable que la réception des signaux de diffusion puisse être effectuée par des terminaux équipés de moyens de synthèse fréquentielle peu performants, ce qui n'est pas le cas pour les signaux de diffusion décrits par le document WO 2015/043779 A1.

## EXPOSÉ DE L'INVENTION

La présente invention a pour objectif de remédier à tout ou partie des limitations des solutions de l'art antérieur, notamment celles exposées ci-avant, en proposant une solution qui permette de limiter la complexité de la réception des signaux de diffusion. L'invention est définie par les revendications 1, 11-13 et 15. A cet effet, et selon un premier aspect, l'invention concerne un procédé d'émission d'un signal de diffusion par un réseau d'accès à destination d'une pluralité de terminaux d'un système de communication sans fil bidirectionnel, ledit procédé d'émission comportant :

- la formation d'un signal d'information SI1 à partir d'informations de diffusion à destination desdits terminaux,
- la formation d'un signal pilote SP,
- l'émission d'un signal de diffusion comportant le signal d'information SI1 et le signal pilote SP, ledit signal d'information SI1 et ledit signal pilote SP étant émis sur des fréquences centrales respectives différentes présentant un écart fréquentiel ΔF1 prédéterminé.

Ainsi, selon l'invention, le signal de diffusion comporte un signal d'information SI1 et un signal pilote SP, émis avec écart fréquentiel ΔF1 prédéterminé par rapport audit signal d'information SI1, connu a priori par les terminaux qui souhaitent extraire les informations de diffusion incluses dans ledit signal d'information SI1. Cet écart fréquentiel ΔF1 prédéterminé forme une signature caractéristique dudit signal de diffusion, qui peut être détectée de manière simple par ces terminaux.

Notamment, un filtrage non linéaire du signal de diffusion va former plusieurs répliques du signal d'information SI1 et du signal pilote SP, sur des fréquences qui dépendent des fréquences centrales sur lesquelles ledit signal d'information SI1 et ledit signal pilote SP ont été émis. En particulier, un filtrage non linéaire comportant un effet quadratique va former une réplique du signal d'information SI1 sur la fréquence ΔF1.

La précision de la fréquence centrale ΔF1 du signal d'information SI1 dépend principalement de la précision de synthèse des fréquences centrales d'émission au niveau du réseau d'accès. En outre, du fait que la fréquence centrale ΔF1 peut être choisie très inférieure aux fréquences centrales d'émission, ladite fréquence centrale ΔF1 peut également être synthétisée avec une bonne précision par les terminaux, y compris avec des moyens de synthèse fréquentielle peu performants.

Dans des modes particuliers de mise en oeuvre, le procédé d'émission peut comporter en outre l'une ou plusieurs des caractéristiques suivantes, prises isolément ou selon toutes les combinaisons techniquement possibles.

Dans des modes particuliers de mise en oeuvre, le procédé d'émission de signal de diffusion comporte la formation d'un autre signal d'information SI2, ledit signal d'information SI2 étant émis sur une fréquence centrale présentant un écart fréquentiel ΔF2 prédéterminé par rapport à la fréquence centrale du signal pilote SP, l'écart fréquentiel ΔF2 étant différent de l'écart fréquentiel ΔF1.

Dans des modes particuliers de mise en oeuvre, le signal d'information SI2 est formé à partir des mêmes informations de diffusion que celles du signal d'information SI1.

Dans des modes particuliers de mise en oeuvre, le signal d'information SI2 est formé à partir d'informations de diffusion distinctes de celles du signal d'information SI1.

Dans des modes particuliers de mise en oeuvre, le signal d'information SI1 et le signal d'information SI2 sont formés selon des protocoles de couche physique respectifs différents.

Dans des modes particuliers de mise en oeuvre, le signal d'information SI1 et le signal d'information SI2 sont formés selon des modulations différentes.

Dans des modes particuliers de mise en oeuvre, les fréquences centrales respectives du signal pilote SP et de chaque signal d'information varient au cours du temps, l'écart fréquentiel, entre la fréquence centrale du signal pilote SP et la fréquence centrale de chaque signal d'information, étant constant au cours du temps.

Dans des modes particuliers de mise en oeuvre, le signal pilote SP est un signal sinusoïdal.

Dans des modes particuliers de mise en oeuvre, l'écart fréquentiel ΔF1 est inférieur à 10 kilohertz, de préférence inférieur à 1 kilohertz.

Dans des modes particuliers de mise en oeuvre, le signal d'information SI1 est à bande ultra étroite.

Dans des modes particuliers de mise en oeuvre, le signal d'information SI1 est de largeur spectrale inférieure à deux fois l'écart fréquentiel ΔF1.

Selon un second aspect, la présente invention concerne une station de base comportant des moyens configurés pour mettre en oeuvre un procédé d'émission de signal de diffusion selon l'un quelconque des modes de mise en oeuvre de l'invention.

Selon un troisième aspect, la présente invention concerne un réseau d'accès comportant des moyens configurés pour mettre en oeuvre un procédé d'émission de signal de diffusion selon l'un quelconque des modes de mise en oeuvre de l'invention.

Selon un quatrième aspect, la présente invention concerne un procédé de réception, par un terminal, d'un signal de diffusion émis conformément à un procédé d'émission selon l'un quelconque des modes de mise en oeuvre de l'invention, ledit procédé de réception comportant :

- le filtrage non linéaire d'un signal reçu par le terminal,
- la recherche d'un signal de diffusion à partir d'un signal obtenu, après filtrage non linéaire du signal reçu, sur la fréquence ΔF1, un signal de diffusion étant détecté lorsque ledit signal obtenu sur la fréquence ΔF1 vérifie un critère de détection prédéfini,

- l'extraction des informations de diffusion du signal de diffusion détecté.

Dans des modes particuliers de mise en oeuvre, le procédé de réception peut comporter en outre l'une ou plusieurs des caractéristiques suivantes, prises isolément ou selon toutes les combinaisons techniquement possibles.
Dans des modes particuliers de mise en oeuvre, l'extraction des informations de diffusion du signal de diffusion détecté est effectuée à partir du signal obtenu, après filtrage non linéaire, sur la fréquence $\Delta F1$.
Dans des modes particuliers de mise en oeuvre, le filtrage non linéaire comporte l'amplification du signal reçu au moyen d'un amplificateur saturé ou la détection d'enveloppe du signal reçu au moyen d'un circuit détecteur d'enveloppe.
Dans des modes particuliers de mise en oeuvre, l'extraction des informations de diffusion comporte la génération en boucle ouverte d'un signal sinusoïdal de fréquence $\Delta F1$, et la multiplication du signal obtenu après filtrage non linéaire par ledit signal sinusoïdal de fréquence $\Delta F1$.
Selon un cinquième aspect, la présente invention concerne un terminal comportant des moyens configurés pour mettre en oeuvre un procédé de réception de signal de diffusion selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de communication sans fil,
- Figure 2 : un diagramme illustrant les principales étapes d'un procédé d'émission d'un signal de diffusion,
- Figure 3 : une représentation schématique, dans le domaine fréquentiel, d'un exemple de signal de diffusion émis selon le procédé d'émission de la figure 2,
- Figure 4 : un diagramme illustrant les principales étapes d'une variante de mise en oeuvre du procédé d'émission de la figure 2,
- Figure 5 : une représentation schématique, dans le domaine fréquentiel, d'un exemple de signal de diffusion émis selon le procédé d'émission de la figure 4,
- Figure 6 : un diagramme illustrant les principales étapes d'un procédé de réception d'un signal de diffusion.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

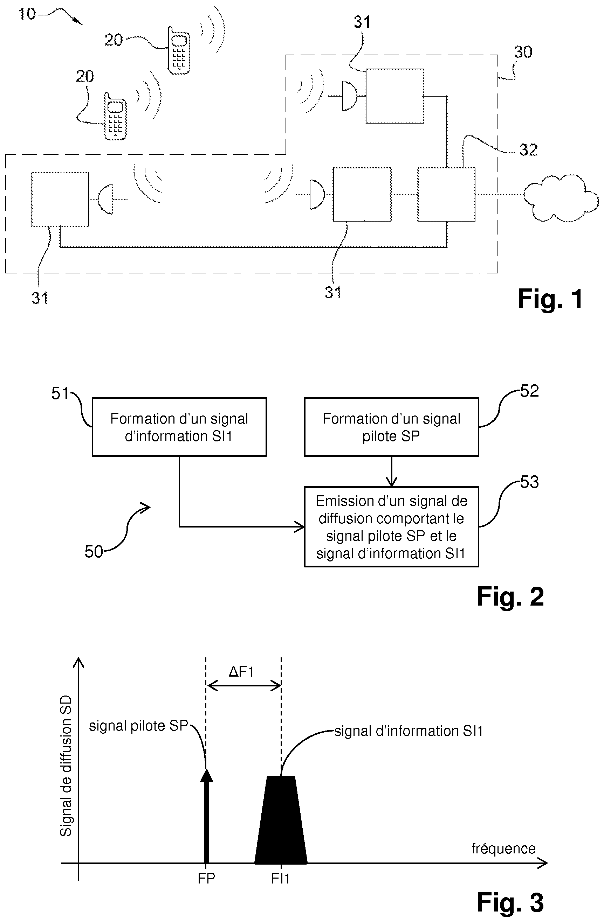

La figure 1 représente schématiquement un système 10 de communication sans fil, par exemple de type UNB, comportant plusieurs terminaux 20 et un réseau d'accès 30 comportant plusieurs stations de base 31.
Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).
Les terminaux 20 sont adaptés à émettre des messages montants sur un lien montant à destination du réseau d'accès 30.
Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, la puissance mesurée dudit message montant reçu, la date de réception et/ou la fréquence centrale mesurée dudit message montant reçu, etc. Le serveur 32 traite par exemple l'ensemble des messages montants reçus des différentes stations de base 31.
Dans le cas présent, le système 10 de communication sans fil UNB est bidirectionnel, et le réseau d'accès 30 est également adapté à émettre, par l'intermédiaire des stations de base 31, des signaux de diffusion sur un lien descendant à destination de terminaux 20, lesquels sont adaptés à les recevoir. Les signaux de diffusion peuvent être des signaux de diffusion globale (« broadcast » dans la littérature anglo-saxonne) et/ou des signaux de diffusion de groupe (« multicast » dans la littérature anglo-saxonne).
De tels signaux de diffusion comportent des informations numériques, dites « informations de diffusion », à destination de tout ou partie des terminaux 20. Les informations de diffusion peuvent être tout type d'information pouvant être utile pour tous les terminaux 20, ou pour un groupe de terminaux 20. Par exemple, les informations de diffusion visent à contrôler le fonctionnement des terminaux 20, par exemple pour l'émission de messages montants sur le lien montant. Notamment, si plusieurs bandes fréquentielles sont possibles pour l'émission des messages montants, alors les signaux de diffusion peuvent comporter des informations de contrôle permettant aux terminaux d'identifier la bande fréquentielle dans laquelle ils doivent émettre leurs messages montants. Suivant un autre exemple non limitatif, il est également possible d'émettre une information de contrôle permettant de synchroniser temporellement les différents terminaux 20 entre eux, par exemple une information de contrôle correspondant à l'heure en échelle de temps universel coordonné UTC.

Les signaux de diffusion émis par les stations de base 31 sont par exemple de durée limitée, par exemple comprise entre quelques centaines de millisecondes et quelques secondes. Le cas échéant, l'émission du signal de diffusion est discontinue, et une station de base 31 émet par exemple un signal de diffusion de manière récurrente, les informations de diffusion pouvant varier d'une émission à une autre. Rien n'exclut cependant, suivant d'autres exemples, d'avoir un signal de diffusion émis de manière continue par une station de base 31.

La présente invention concerne notamment un procédé 50 d'émission d'un signal de diffusion par le réseau d'accès 30, ainsi qu'un procédé 60 de réception d'un signal de diffusion par un terminal 20.

A) Procédé d'émission de signal de diffusion

La figure 2 représente schématiquement les principales étapes d'un procédé 50 d'émission d'un signal de diffusion par le réseau d'accès 30.

Tel qu'illustré par la figure 2, le procédé 50 d'émission comporte principalement les étapes suivantes, qui seront décrites plus en détail ci-après :

- 51 formation d'un signal d'information SI1 à partir d'informations de diffusion à destination d'une pluralité de terminaux 20,
- 52 formation d'un signal pilote SP,
- 53 émission d'un signal de diffusion comportant le signal d'information SI1 et le signal pilote SP, ledit signal d'information SI1 et ledit signal pilote SP étant émis sur des fréquences centrales respectives différentes présentant un écart fréquentiel $\Delta F1$ prédéterminé.

Parmi les différentes étapes illustrées par la figure 2, seule l'étape 53 d'émission du signal de diffusion doit nécessairement être exécutée au moins partiellement par une station de base 31. Les autres étapes illustrées par la figure 2 peuvent être exécutées par une station de base 31 et/ou par le serveur 32 du réseau d'accès 30. Par exemple, l'étape 51 de formation du signal d'information SI1 et l'étape 52 de formation du signal pilote SP peuvent être exécutées par le serveur 32, qui transmet ensuite le signal d'information SI1 et le signal pilote SP à une station de base 31 qui émet le signal de diffusion au cours de l'étape 53 d'émission.

Dans la suite de la description, on se place dans le cas où les étapes illustrées par la figure 2 sont toutes exécutées par les stations de base 31 dudit réseau d'accès 30. Il est cependant à noter que les informations de diffusion, à partir desquelles une station de base 31 forme le signal d'information SI1, peuvent néanmoins être fournies par le serveur 32.

Les stations de base 31 comportent par exemple des modules de traitement respectifs (non représentés sur les figures), chaque module de traitement comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'émission de signal de diffusion. Dans une variante, chaque module de traitement comporte un ou des circuits logiques programmables, de type FPGA, PLD, etc., et/ou circuits intégrés spécialisés (ASIC) adaptés à mettre en oeuvre tout ou partie desdites étapes du procédé 50 d'émission de signal de diffusion.

Chaque station de base 31 comporte en outre des moyens de communication sans fil, considérés comme connus de l'homme de l'art, permettant à ladite station de base de recevoir des messages montants et d'émettre des signaux de diffusion sous la forme de signaux radioélectriques.

En d'autres termes, les stations de base 31 du réseau d'accès 30 comportent des moyens respectifs configurés de façon logicielle (produit programme d'ordinateur spécifique) et/ou matérielle (FPGA, PLD, ASIC, etc.) pour mettre en oeuvre les différentes étapes du procédé 50 d'émission de signal de diffusion.

Le signal d'information SI1 est formé à partir des informations de diffusion, au cours de l'étape 51 de formation, de manière conventionnelle. Par exemple, les informations de diffusion peuvent être codées au moyen d'un code correcteur d'erreur, et des informations de contrôle peuvent être ajoutées, telles qu'un motif de synchronisation temporelle, des données de détection d'erreurs (par exemple un contrôle de redondance cyclique - « Cyclic Redundancy Check » ou CRC dans la littérature anglo-saxonne), un identifiant d'un groupe de terminaux 20 dans le cas d'une diffusion de groupe (« multicast »), etc. Les données ainsi obtenues peuvent ensuite être modulées selon toute méthode connue de l'homme de l'art, par exemple selon une modulation BPSK (« Binary Phase Shift Keying », GFSK (« Gaussian Phase Shift Keying »), etc.

Le signal pilote SP est destiné à être émis, dans le signal de diffusion, avec un écart fréquentiel ΔF1 non nul prédéterminé par rapport au signal d'information SI1. Cet écart fréquentiel ΔF1, qui est connu a priori des terminaux 20, forme une signature caractéristique dudit signal de diffusion, et la fonction principale du signal pilote SP est de réaliser l'écart fréquentiel ΔF1 dans le signal de diffusion.

Par conséquent, le signal pilote SP peut être particulièrement simple et prend la forme, dans des modes préférés de mise en oeuvre, d'un signal sinusoïdal (« Continuous Wave » ou CW dans la littérature anglo-saxonne). Rien n'exclut cependant, suivant d'autres exemples, d'avoir un signal pilote SP plus complexe. Notamment, le signal pilote SP peut, suivant d'autres exemples, être formé uniquement à partir de données connues a priori des terminaux 20, ou encore être formé à partir d'une partie des informations de diffusion à destination des terminaux 20.

Dans la suite de la description, on se place de manière non limitative dans le cas où le signal pilote SP est un signal sinusoïdal CW.

Tel qu'indiqué précédemment, le signal d'information SI1 et le signal pilote SP sont émis, au cours de l'étape 53, sur des fréquences centrales respectives différentes présentant un écart fréquentiel ΔF1 non nul prédéterminé, connu a priori des terminaux 20. Il est à noter que l'écart fréquentiel ΔF1 peut être constant au cours du temps, ou varier au cours du temps, dès lors que celui-ci est connu a priori des terminaux 20. Par exemple, l'écart fréquentiel ΔF1 peut prendre successivement, d'une émission à une autre, plusieurs valeurs prédéfinies, toutes connues a priori des terminaux 20. Dans la suite de la description, on se place de manière non limitative dans le cas où l'écart fréquentiel ΔF1 est constant au cours du temps.

La figure 3 représente schématiquement, dans le domaine fréquentiel, un exemple non limitatif de signal de diffusion conforme à l'invention.

Dans l'exemple illustré par la figure 3, la fréquence centrale FI1 sur laquelle est émis le signal d'information SI1 et la fréquence centrale FP sur laquelle est émis le signal pilote SP (c'est-à-dire la fréquence du signal sinusoïdal CW) sont reliées par l'expression suivante :

$$FI1 = FP + \Delta F1$$

Il est à noter que les fréquences centrales FI1 et FP sont élevées, typiquement supérieures à plusieurs mégahertz, voire supérieures à plusieurs centaines de mégahertz. Par exemple, les fréquences centrales FI1 et FP sont comprises dans la bande ISM (« Industrial, Scientific and Médical »).

Par contre, l'écart fréquentiel ΔF1 est de préférence très inférieur aux fréquences centrales FI1 et FP. Dans des modes préférés de mise, l'écart fréquentiel ΔF1 est inférieur à 10 kilohertz, voire inférieur à 1 kilohertz. De telles dispositions sont avantageuses en ce qu'elles permettent d'une part de limiter la largeur spectrale du signal de diffusion (et donc la largeur de la bande fréquentielle dans laquelle un terminal 20 doit rechercher le signal de diffusion) et, d'autre part, de permettre la réception du signal de diffusion avec des moyens de synthèse fréquentielle peu performants, comme décrit ci-après.

Dans l'exemple illustré par la figure 3, le signal d'information SI1 est de largeur spectrale inférieure à deux fois l'écart fréquentiel ΔF1. Par exemple, la largeur spectrale du signal d'information est de l'ordre de 100 Hertz, et l'écart fréquentiel ΔF1 est égal à 200 Hertz. De telles dispositions permettent de faciliter la réception du signal de diffusion. Rien n'exclut cependant, suivant d'autres exemples, d'avoir un signal d'information SI1 de largeur spectrale supérieure à deux fois l'écart fréquentiel ΔF1.

La fréquence centrale FI1 du signal d'information SI1 et la fréquence centrale FP du signal pilote SP sont par exemple constantes au cours du temps. Cependant, dans un tel cas, le signal de diffusion est peu robuste à la présence d'interférences.

Pour améliorer la robustesse aux interférences, les fréquences centrales FP et FI1 du signal pilote SP et du signal d'information SI1 varient au cours du temps dans une bande fréquentielle prédéfinie. Par contre, l'écart fréquentiel ΔF1, entre la fréquence centrale FP du signal pilote SP et la fréquence centrale FI1 du signal d'information SI1, reste de préférence constant au cours du temps. En d'autres termes :

$$FI1(t) = FP(t) + \Delta F1$$

La variation temporelle des fréquences centrales FP et FI1 est par exemple continue. Suivant un premier exemple, la variation des fréquences centrales FP et FI1 est sinusoïdale, par exemple selon les expressions suivantes :

$$FP(t) = F_0 + A_0 \cdot \sin(\omega_0 \cdot t)$$

$$FI1(t) = FP(t) + \Delta F1$$

expressions dans lesquelles :

- $F_0$ correspond à une fréquence de référence prédéfinie,
- $A_0$ correspond à une amplitude de variation prédéfinie,
- $\omega_0$ correspond à une pulsation de variation prédéfinie.

Par conséquent, la fréquence centrale FP du signal pilote SP varie dans une bande fréquentielle BP prédéfinie comportant une borne inférieure FP1 et une borne supérieure FP2. Dans l'exemple ci-dessus, la fréquence FP1 est égale à $(F_0 - A_0)$ et la fréquence FP2 est égale à $(F_0 + A_0)$. Il est à noter que, contrairement à l'écart fréquentiel $\Delta F1$, la fréquence de référence $F_0$, l'amplitude de variation $A_0$ et la pulsation de variation $\omega_0$ n'ont pas être connues des terminaux 20. Il peut cependant s'avérer avantageux, pour limiter la complexité desdits terminaux 20, que la bande fréquentielle BP soit connue des terminaux ou puisse être déterminée par ceux-ci.

Suivant un second exemple non limitatif, la variation des fréquences centrales FP et FI1 est linéaire, par exemple selon les expressions suivantes :

$$FP(t) = F_0 + \delta F \cdot t$$

$$FI1(t) = FP(t) + \Delta F1$$

expressions dans lesquelles $\delta F$ correspond à une pente de variation prédéfinie.

Dans les expressions précédentes, la fréquence centrale FP du signal pilote SP est de préférence maintenue à l'intérieur de la bande fréquentielle BP. Par exemple, si la pente de variation $\delta F$ est positive, alors la fréquence centrale FP croît progressivement de la fréquence FP1 à la fréquence FP2. Lorsque la fréquence centrale FP atteint la fréquence FP2, elle recommence à croître à partir de la fréquence FP1, etc.

Suivant d'autres exemples, la variation temporelle des fréquences centrales FP et FI1 peut être discontinue. Le cas échéant, la fréquence centrale FP et FI1 suivent par exemple des motifs de sauts de fréquences prédéfinis. Il est à noter que, contrairement à l'écart fréquentiel $\Delta F1$, les motifs de sauts de fréquences n'ont pas être connus des terminaux 20. Il peut cependant s'avérer avantageux que la bande fréquentielle BP soit connue des terminaux ou puisse être déterminée par ceux-ci.

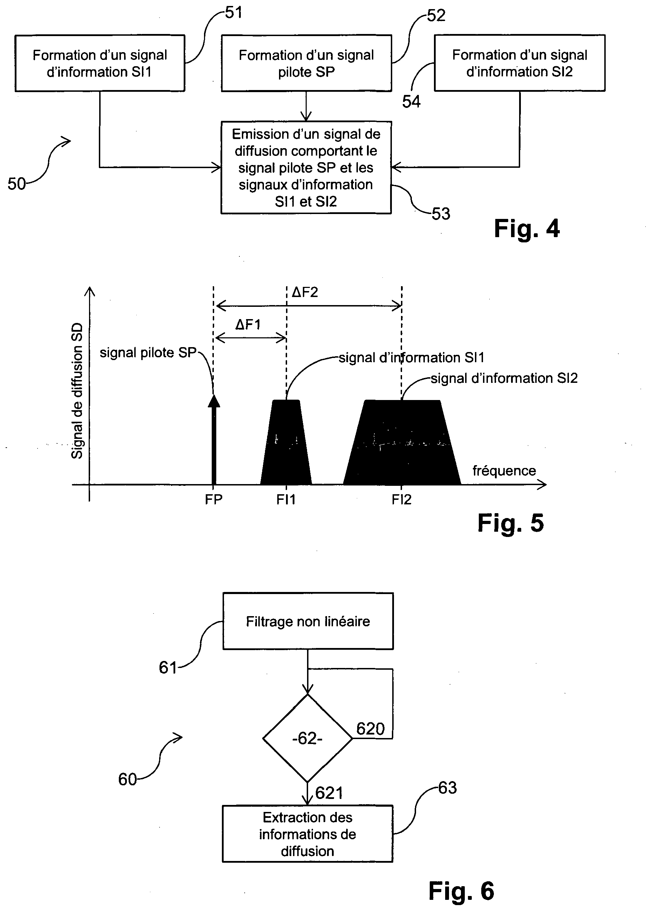

La figure 4 représente schématiquement un mode particulier de mise en oeuvre d'un procédé 50 d'émission de signal de diffusion. Outre, les étapes déjà décrites en référence à la figure 3, le procédé 50 d'émission illustré par la figure 4 comporte une étape 54 de formation d'un autre signal d'information SI2. Le signal de diffusion émis comporte le signal pilote SP et les signaux d'information SI1 et SI2, et ledit signal d'information SI2 est émis sur une fréquence centrale FI2 présentant un écart fréquentiel $\Delta F2$ prédéterminé par rapport à la fréquence centrale FP du signal pilote SP, l'écart fréquentiel $\Delta F2$ étant différent de l'écart fréquentiel $\Delta F1$. Comme l'écart fréquentiel $\Delta F1$, l'écart fréquentiel $\Delta F2$ peut être constant au cours du temps, ou varier au cours du temps, dès lors que celui-ci est connu a priori des terminaux 20. Dans la suite de la description, on se place de manière non limitative dans le cas où l'écart fréquentiel $\Delta F2$ est constant au cours du temps.

La figure 5 représente schématiquement, dans le domaine fréquentiel, un exemple non limitatif de signal de diffusion comportant le signal pilote SP, le signal d'information SI1 et le signal d'information SI2, dans lequel la fréquence centrale FP du signal pilote SP et la fréquence centrale FI2 du signal d'information SI2 sont reliées par l'expression suivante :

$$FI2 = FP + \Delta F2$$

Dans l'exemple non limitatif illustré par la figure 5, les écarts fréquentiels $\Delta F1$ et $\Delta F2$ sont tous deux positifs, et l'écart fréquentiel $\Delta F2$ est supérieur à l'écart fréquentiel $\Delta F1$. Par exemple, l'écart fréquentiel $\Delta F1$ est égal à 200 Hertz et l'écart fréquentiel $\Delta F2$ est égal à 700 Hertz. En outre, le signal d'information SI1 et le signal d'information SI2 ne présentent pas de recouvrement entre eux dans le domaine fréquentiel.

De manière plus générale, ce qui a été décrit précédemment pour l'écart fréquentiel ΔF1 est également applicable pour l'écart fréquentiel AF2. Notamment, dans le cas où les fréquences centrales FP et FI1 du signal pilote SP et du signal d'information SI1 varient au cours du temps, alors la fréquence centrale FI2 du signal d'information SI2 varie également au cours du temps, de préférence de telle sorte que l'écart fréquentiel ΔF2 reste constant.

Plusieurs utilisations sont possibles pour le signal d'information SI2.

Par exemple, le signal d'information SI2 peut être identique au signal d'information SI1. Dans un tel cas, le signal d'information SI2 est émis principalement à des fins de redondance, par exemple pour améliorer la robustesse du signal de diffusion aux interférences, alternativement ou en complément à la variation temporelle des fréquences centrales du signal pilote SP et des signaux d'information SI1 et SI2.

Suivant un autre exemple, le signal d'information SI2 peut être différent du signal d'information SI1. Par exemple, le signal d'information SI2 peut être formé à partir d'informations de diffusion différentes de celles utilisées pour former du signal d'information SI1.

Alternativement ou en complément à l'utilisation d'informations de diffusion différentes, le signal d'information SI2 peut être formé selon un protocole de couche physique différent de celui utilisé pour former le signal d'information SI1. Par « protocole de couche physique différent », on entend que le signal de diffusion SI2 est différent du signal d'information SI1 même lorsque les informations de diffusion sont les mêmes. Par exemple, le signal d'information SI1 et le signal d'information SI2 peuvent différer par leur débit binaire, par leur code correcteur d'erreurs, par leurs informations de contrôle, etc. Dans l'exemple non limitatif illustré par la figure 5, le signal d'information SI2 est de largeur spectrale supérieure à celle du signal d'information SI1, par exemple égale à 600 Hertz.

Dans un tel cas, le signal d'information SI1 est par exemple destiné à un premier groupe de terminaux 20 compatibles avec un premier protocole de couche physique, et le signal d'information SI2 est destiné à un second groupe de terminaux 20 compatibles avec un second protocole de couche physique.

Dans des modes préférés de mise en oeuvre, le signal d'information SI1 et le signal d'information SI2 différent au moins par la modulation utilisée. Par exemple, l'un desdits signaux d'information est modulé selon une modulation BPSK et l'autre desdits signaux d'information est modulé selon une modulation GFSK.

Il est à noter que, si les messages montants émis par les terminaux 20 sont à bande ultra étroite dans un système de communication sans fil UNB, les signaux de diffusion, eux, ne sont pas nécessairement à bande ultra étroite et peuvent avoir une largeur spectrale instantanée supérieure à un kilohertz. Dans des modes préférés de mise en oeuvre, le signal d'information SI1 est à bande ultra étroite. De préférence, dans le cas où le signal de diffusion comporte plusieurs signaux d'information, chacun desdits signaux d'information est à bande ultra étroite.


B) Procédé de réception de signal de diffusion

De manière générale, de nombreux procédés de réception peuvent être mis en oeuvre pour recevoir le signal de diffusion, et plus particulièrement pour détecter le signal de diffusion et/ou extraire les informations de diffusion du signal d'information SI1 (et, le cas échéant, du signal d'information SI2).

Toutefois, du fait de la forme particulière du signal de diffusion, en particulier de l'écart fréquentiel ΔF1 prédéterminé entre le signal pilote SP et le signal d'information SI1, la réception du signal de diffusion peut être réalisée de manière simple et économique.

La figure 6 représente schématiquement les principales étapes d'un procédé 60 de réception, par un terminal 20, d'un signal de diffusion émis par le réseau d'accès 30 conformément à ce qui a été décrit ci-avant.

Par exemple, chaque terminal 20 comporte un module de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 60 de réception de signal de diffusion. Dans une variante, le module de traitement comporte un ou des circuits logiques programmables, de type FPGA, PLD, etc., et/ou circuits intégrés spécialisés (ASIC) adaptés à mettre en oeuvre tout ou partie desdites étapes du procédé 60 de réception de signal de diffusion. Chaque terminal 20 comporte en outre des moyens de communication sans fil, considérés comme connus de l'homme de l'art, permettant audit terminal d'émettre des messages montants et de recevoir des messages descendants sous la forme de signaux radioélectriques.

En d'autres termes, chaque terminal 20 comporte un ensemble de moyens configurés de façon logicielle (produit programme d'ordinateur spécifique) et/ou matérielle (FPGA, PLD, ASIC, etc.) pour mettre en oeuvre les différentes étapes du procédé 60 de réception de signal de diffusion.

Tel qu'illustré par la figure 6, le procédé 60 de réception de signal de diffusion comporte tout d'abord une étape 61 de filtrage non linéaire du signal reçu par le terminal 20.

Par « filtrage non linéaire » on entend un filtrage comportant un effet sensiblement quadratique, c'est-à-dire dont le signal en sortie comporte le signal en entrée élevé au carré. En effet, si l'on considère par exemple les expressions suivantes du signal pilote SP et du signal d'information SI1 :

$$SP(t) = \sin(\omega_{FP} \cdot t)$$

$$SI1(t) = A_{SI1}(t) \cdot \sin(\omega_{FI1} \cdot t)$$

expressions dans lesquelles :

- $\omega_{FP}$ correspond à la pulsation associée à la fréquence centrale FP,
- $A_{SI1}(t)$ correspond au signal d'information SI1(t) en bande de base,
- $\omega_{FI1}$ correspond à la pulsation associée à la fréquence centrale FI1.

Alors le signal de diffusion SD est égal à :

$$SD(t) = \sin(\omega_{FP} \cdot t) + A_{SI1}(t) \cdot \sin(\omega_{FI1} \cdot t)$$

Après filtrage non linéaire, le signal obtenu comporte le signal de diffusion SD élevé au carré :

$$
\begin{aligned}
(SD(t))^2 &= (\sin(\omega_{FP} \cdot t) + A_{SI1}(t) \cdot \sin(\omega_{FI1} \cdot t))^2 \\
&= (\sin(\omega_{FP} \cdot t))^2 + (A_{SI1}(t) \cdot \sin(\omega_{FI1} \cdot t))^2 + 2(\sin(\omega_{FP} \cdot t) \cdot A_{SI1}(t) \cdot \sin(\omega_{FI1} \cdot t)) \\
&= (1 - \cos(2 \cdot \omega_{FP} \cdot t))/2 + (A_{SI1}(t))^2 \cdot (1 - \cos(2 \cdot \omega_{FI1} \cdot t))/2 \\
&\quad + A_{SI1}(t) \cdot (\cos(\omega_{FP} \cdot t - \omega_{FI1} \cdot t) - \cos(\omega_{FP} \cdot t + \omega_{FI1} \cdot t)) \\
&= (1 + A_{SI1}(t)^2)/2 + A_{SI1}(t) \cdot \cos(\omega_{\Delta F1} \cdot t) - \cos(2 \cdot \omega_{FP} \cdot t)/2 \\
&\quad - (A_{SI1}(t))^2 \cdot \cos(2 \cdot \omega_{FI1} \cdot t)/2 - A_{SI1}(t) \cdot \cos(\omega_{FP} \cdot t + \omega_{FI1} \cdot t)
\end{aligned}
$$

expression dans laquelle $\omega_{\Delta F1}$ correspond à la pulsation associée à l'écart fréquentiel $\Delta F1$.
Par conséquent, le signal obtenu après filtrage non linéaire comporte, entre autres composantes, la composante suivante :

$$A_{SI1}(t) \cdot \cos(\omega_{\Delta F1} \cdot t)$$

qui correspond au signal d'information SI1 sur la fréquence $\Delta F1$. Les autres composantes obtenues peuvent éventuellement, si nécessaire, être supprimées en tout ou partie par un filtrage adapté.
Par conséquent, grâce au filtrage non linéaire et à la forme particulière du signal de diffusion, le signal d'information SI1 est ramené sur une fréquence $\Delta F1$. Le filtrage non linéaire peut par exemple être réalisé au moyen d'un amplificateur saturé ou au moyen d'un circuit détecteur d'enveloppe, et peut par conséquent être réalisé de façon simple et économique.
Il est à noter que le signal fourni en entrée du filtre non linéaire correspond à un signal mesuré dans une bande fréquentielle comportant le signal de diffusion SD. Ce signal mesuré peut éventuellement être translaté en fréquences vers des fréquences inférieures, sans que cela n'impacte la réception du signal de diffusion puisque l'écart fréquentiel $\Delta F1$ est inchangé par une telle translation en fréquences.
Ensuite, le procédé 60 de réception comporte une étape 62 de recherche d'un signal de diffusion à partir du signal obtenu, après filtrage non linéaire, sur la fréquence $\Delta F1$. La recherche de signal de diffusion consiste à vérifier si le signal obtenu sur la fréquence $\Delta F1$ vérifie un critère de détection prédéfini. Par exemple, le critère de détection peut être considéré comme vérifié si l'énergie reçue sur la fréquence $\Delta F1$ est supérieure à une valeur seuil prédéfinie. Suivant un autre exemple non limitatif, il est possible de ramener le signal obtenu sur la fréquence $\Delta F1$ en bande de base et de le corréler avec un motif de synchronisation temporelle prédéfini inclus dans le signal d'information SI1, le critère de détection étant considéré comme vérifié si le résultat de la corrélation dépasse une valeur seuil prédéfinie.
L'exécution de l'étape 62 de recherche se poursuit tant qu'aucun signal de diffusion n'est détecté (référence 620 sur la figure 6). Lorsqu'un signal de diffusion est détecté (référence 621 sur la figure 6), alors le procédé 60 de réception comporte une étape 63 d'extraction des informations de diffusion incluses dans le signal d'information SI1.

Il est à noter que, une fois un signal de diffusion détecté à partir du signal obtenu après filtrage non linéaire, l'extraction peut être réalisée à partir du signal d'information SI1 sur la fréquence centrale FI1, avant filtrage non linéaire. Toutefois, il peut s'avérer nécessaire, dans un tel cas, de disposer de moyens de synthèse fréquentielle relativement performants.

Dans des modes préférés de mise en oeuvre, les informations de diffusion du signal de diffusion détecté sont extraites à partir du signal d'information SI1 obtenu, après filtrage non linéaire, sur la fréquence ΔF1. De telles dispositions sont très avantageuses dans la mesure où l'extraction des informations de diffusion peut être réalisée avec des moyens de synthèse fréquentielle peu performants. En effet, la fréquence ΔF1 est en principe précise (générée par les stations de base 31) et peut être choisie faible, par exemple de l'ordre de quelques centaines de Hertz. Par conséquent, même avec des moyens de synthèse fréquentielle peu performants, la dérive de la fréquence ΔF1 générée par le terminal 20 est en principe négligeable sur une durée de quelques secondes à quelques minutes. Par exemple, l'extraction des informations de diffusion comporte la génération en boucle ouverte d'un signal sinusoïdal de fréquence ΔF1, et la multiplication du signal obtenu après filtrage non linéaire par ledit signal sinusoïdal de fréquence ΔF1. Rien n'exclut cependant de générer ledit signal sinusoïdal de fréquence ΔF1 en boucle fermée, par exemple au moyen d'un PLL, d'une boucle de Costa, etc.

Dans le cas où le signal de diffusion SD comporte en outre un signal d'information SI2, et dans le cas où la réception du signal de diffusion SD comporte une étape de filtrage non linéaire, alors l'écart fréquentiel ΔF1 et l'écart fréquentiel ΔF2 sont de préférence choisis de sorte à assurer que, après filtrage non linéaire, le signal d'information SI1 et le signal d'information SI2, ramenés sur respectivement la fréquence ΔF1 et la fréquence ΔF2, ne soient pas trop perturbés par d'autres composantes.

Par exemple, en désignant par B1 la largeur spectrale du signal d'information SI1 et par B2 la largeur spectrale du signal d'information SI2, alors il est possible de choisir les écarts fréquentiels ΔF1 et ΔF2 de telle sorte que les expressions suivantes sont vérifiées (en supposant ΔF2 > ΔF1) :

$$B1+B2/2 < \Delta F2 - 2{\cdot}\Delta F1$$

$$B1/2 + B2 < \Delta F1$$

Les expressions ci-dessus permettent d'assurer, dans le cas d'un effet purement quadratique du filtrage non linéaire, que le signal d'information SI1 et le signal d'information SI2, obtenus sur les fréquences ΔF1 et ΔF2, ne présentent pas de recouvrement fréquentiel avec d'autres composantes du signal obtenu après filtrage non linéaire.

Si le filtrage non linéaire n'est pas limité à un effet quadratique, alors les écarts fréquentiels ΔF1 et ΔF2 sont préférentiellement choisis de sorte que l'écart fréquentiel ΔF2 n'est pas un harmonique de l'écart fréquentiel ΔF1 (et inversement si l'écart fréquentiel ΔF1 est supérieur à l'écart fréquentiel ΔF2).

De manière plus générale, il est possible de choisir les écarts fréquentiels ΔF1 et ΔF2 par simulation du filtrage non linéaire sur un signal de diffusion SD, en faisant varier les valeurs respectives des écarts fréquentiels ΔF1 et ΔF2 pour assurer que les signaux d'information SI1 et SI2, ramenés sur les fréquences respectivement ΔF1 et ΔF2, ne soient pas trop perturbés par les autres composantes du signal obtenu après filtrage non linéaire.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant un signal de diffusion comportant un ou deux signaux d'information. Rien n'exclut, suivant d'autres exemples, de considérer un signal de diffusion comportant un nombre de signaux d'information supérieur à deux, émis le cas échéant sur des fréquences centrales respectives présentant des écarts fréquentiels respectifs différents prédéterminés par rapport à la fréquence centrale du signal pilote SP, connus a priori des terminaux.

**Revendications**

**1.** Procédé (50) d'émission d'un signal de diffusion par un réseau d'accès (30) à destination d'une pluralité de terminaux (20) d'un système de communication sans fil bidirectionnel, ledit procédé (50) comportant :

- la formation (51) d'un signal d'information SI1 à partir d'informations de diffusion à destination desdits terminaux (20),
- la formation (52) d'un signal pilote SP,
- l'émission (53) d'un signal de diffusion comportant le signal d'information SI1 et le signal pilote SP, ledit signal d'information SI1 et ledit signal pilote SP étant émis sur des fréquences centrales respectives différentes présentant un écart fréquentiel ΔF1 prédéterminé.

2. Procédé (50) selon la revendication 1, comportant la formation d'un autre signal d'information SI2, ledit signal d'information SI2 étant émis sur une fréquence centrale présentant un écart fréquentiel ΔF2 prédéterminé par rapport à la fréquence centrale du signal pilote SP, l'écart fréquentiel ΔF2 étant différent de l'écart fréquentiel ΔF1.

3. Procédé (50) la revendication 2, dans lequel le signal d'information SI2 est formé à partir des mêmes informations de diffusion que celles du signal d'information SI1.

4. Procédé (50) la revendication 2, dans lequel le signal d'information SI2 est formé à partir d'informations de diffusion distinctes de celles du signal d'information SI1.

5. Procédé (50) selon l'une des revendications 2 à 4, dans lequel le signal d'information SI1 et le signal d'information SI2 sont formés selon des protocoles de couche physique respectifs différents.

6. Procédé (50) selon la revendication 5, dans lequel le signal d'information SI1 et le signal d'information SI2 sont formés selon des modulations différentes.

7. Procédé (50) selon l'une des revendications précédentes, dans lequel les fréquences centrales respectives du signal pilote SP et de chaque signal d'information varient au cours du temps, l'écart fréquentiel entre la fréquence centrale du signal pilote SP et la fréquence centrale de chaque signal d'information étant constant au cours du temps.

8. Procédé (50) selon l'une des revendications précédentes, dans lequel le signal pilote SP est un signal sinusoïdal.

9. Procédé (50) selon l'une des revendications précédentes, dans lequel l'écart fréquentiel ΔF1 est inférieur à 10 kilohertz, de préférence inférieur à 1 kilohertz.

10. Procédé (50) selon l'une des revendications précédentes, dans lequel le signal d'information SI1 est à bande ultra étroite.

11. Station de base (31) pour l'émission d'un signal de diffusion à destination d'une pluralité de terminaux (20) d'un système de communication sans fil bidirectionnel, la station de base comportant :

   - des moyens configurés pour former un signal d'information SI1 à partir d'informations de diffusion à destination des terminaux (20),
   - des moyens configurés pour former un signal pilote SP,
   - des moyens configurés pour émettre un signal de diffusion comportant le signal d'information SI1 et le signal pilote SP, ledit signal d'information SI1 et ledit signal pilote SP étant émis sur des fréquences centrales respectives différentes présentant un écart fréquentiel ΔF1 prédéterminé.

12. Réseau d'accès (30) pour l'émission d'un signal de diffusion à destination d'une pluralité de terminaux (20) d'un système de communication sans fil bidirectionnel, le réseau d'accès comportant :

   - des moyens configurés pour former un signal d'information SI1 à partir d'informations de diffusion à destination des terminaux (20),
   - des moyens configurés pour former un signal pilote SP,
   - des moyens configurés pour émettre un signal de diffusion comportant le signal d'information SI1 et le signal pilote SP, ledit signal d'information SI1 et ledit signal pilote SP étant émis sur des fréquences centrales respectives différentes présentant un écart fréquentiel ΔF1 prédéterminé.

13. Procédé (60) de réception, par un terminal (20), d'un signal de diffusion émis par un réseau d'accès (30) d'un système de communication sans fil bidirectionnel, ledit signal de diffusion comportant un signal pilote et un signal d'information SI1 formé à partir d'informations de diffusion à destination d'une pluralité de terminaux (20), ledit signal d'information SI1 et ledit signal pilote SP étant émis sur des fréquences centrales respectives différentes présentant un écart fréquentiel ΔF1 prédéterminé, ledit procédé de réception comportant :

   - le filtrage non linéaire (61) d'un signal reçu par le terminal (20),

- la recherche (62) du signal de diffusion à partir d'un signal obtenu, après filtrage non linéaire du signal reçu, sur la fréquence ΔF1, le signal de diffusion étant détecté lorsque ledit signal obtenu sur la fréquence ΔF1 vérifie un critère de détection prédéfini,
- l'extraction (63) des informations de diffusion du signal de diffusion détecté.

**14.** Procédé (60) selon la revendication 13, dans lequel l'extraction (63) des informations de diffusion du signal de diffusion détecté est effectuée à partir du signal obtenu, après filtrage non linéaire, sur la fréquence ΔF1.

**15.** Terminal (20) pour la réception d'un signal de diffusion émis par un réseau d'accès (30) d'un système de communication sans fil bidirectionnel, ledit signal de diffusion comportant un signal pilote et un signal d'information SI1 formé à partir d'informations de diffusion à destination d'une pluralité de terminaux (20), ledit signal d'information SI1 et ledit signal pilote SP étant émis sur des fréquences centrales respectives différentes présentant un écart fréquentiel ΔF1 prédéterminé, ledit terminal comportant :

- des moyens configurés pour effectuer un filtrage non linéaire (61) d'un signal reçu par le terminal (20),
- des moyens configurés pour rechercher le signal de diffusion à partir d'un signal obtenu, après filtrage non linéaire du signal reçu, sur la fréquence ΔF1, le signal de diffusion étant détecté lorsque ledit signal obtenu sur la fréquence ΔF1 vérifie un critère de détection prédéfini,
- des moyens configurés pour extraire les informations de diffusion du signal de diffusion détecté.

**Patentansprüche**

**1.** Verfahren (50) zum Emittieren eines Übertragungssignals über ein Zugriffsnetzwerk (30), das für eine Vielzahl von Endgeräten (20) eines drahtlosen bidirektionalen Kommunikationssystems bestimmt ist, wobei das Verfahren (50) umfasst:

- Bilden (51) eines Informationssignals SI1 ausgehend von Übertragungsinformationen, das für die Endgeräte (20) bestimmt ist,
- Bilden (52) eines Pilotsignals SP,
- Emittieren (53) eines Übertragungssignals, welches das Informationssignal SI1 und das Pilotsignal SP umfasst, wobei das Informationssignal SI1 und das Pilotsignal SP auf jeweiligen unterschiedlichen zentralen Frequenzen emittiert werden, die eine vorbestimmte Frequenzabweichung ΔF1 aufweisen.

**2.** Verfahren (50) nach Anspruch 1, das das Bilden eines weiteren Informationssignals SI2 umfasst, wobei das Informationssignal SI2 auf einer zentralen Frequenz emittiert wird, die eine vorbestimmte Frequenzabweichung ΔF2 im Verhältnis zur zentralen Frequenz des Pilotsignals SP aufweist, wobei sich die Frequenzabweichung ΔF2 von der Frequenzabweichung ΔF1 unterscheidet.

**3.** Verfahren (50) nach Anspruch 2, wobei das Informationssignal SI2 aus denselben Übertragungsinformationen wie jenen des Informationssignals SI1 gebildet wird.

**4.** Verfahren (50) nach Anspruch 2, wobei das Informationssignal SI2 aus Übertragungsinformationen gebildet wird, die sich von jenen des Informationssignals SI1 unterscheiden.

**5.** Verfahren (50) nach einem der Ansprüche 2 bis 4, wobei das Informationssignal SI1 und das Informationssignal SI2 gemäß jeweiligen unterschiedlichen physikalischen Schichtprotokollen gebildet werden.

**6.** Verfahren (50) nach Anspruch 5, wobei das Informationssignal SI1 und das Informationssignal SI2 gemäß unterschiedlichen Modulationen gebildet werden.

**7.** Verfahren (50) nach einem der vorstehenden Ansprüche, wobei die jeweiligen zentralen Frequenzen des Pilotsignals SP und jedes Informationssignals im Laufe der Zeit variieren, wobei die Frequenzabweichung zwischen der zentralen Frequenz des Pilotsignals SP und der zentralen Frequenz jedes Informationssignals im Laufe der Zeit konstant ist.

**8.** Verfahren (50) nach einem der vorstehenden Ansprüche, wobei das Pilotsignal SP ein Sinussignal ist.

**9.** Verfahren (50) nach einem der vorstehenden Ansprüche, wobei die Frequenzabweichung ΔF1 kleiner als 10 Kilohertz, vorzugsweise kleiner als 1 Kilohertz ist.

10. Verfahren (50) nach einem der vorstehenden Ansprüche, wobei das Informationssignal SI1 eines mit einem Ultra-Schmalband ist.

11. Basisstation (31) zum Emittieren eines Übertragungssignals, das für eine Vielzahl von Endgeräten (20) eines drahtlosen bidirektionalen Kommunikationssystems bestimmt ist, wobei die Basisstation umfasst:

- Mittel, die konfiguriert sind, um ein Informationssignal SI1 ausgehend von Übertragungsinformationen zu bilden, das für Endgeräte (20) bestimmt ist,
- Mittel, die konfiguriert sind, um ein Pilotsignal SP zu bilden,
- Mittel, die konfiguriert sind, um ein Übertragungssignal zu emittieren, welches das Informationssignal SI1 und das Pilotsignal SP umfasst, wobei das Informationssignal SI1 und das Pilotsignal SP auf jeweiligen unterschiedlichen zentralen Frequenzen emittiert werden, die eine vorbestimmte Frequenzabweichung ΔF1 aufweisen.

12. Zugriffsnetzwerk (30) zum Emittieren eines Übertragungssignals, das für eine Vielzahl von Endgeräten (20) eines drahtlosen bidirektionalen Kommunikationssystems bestimmt ist, wobei das Zugriffsnetzwerk umfasst:

- Mittel, die konfiguriert sind, um ein Informationssignal SI1 ausgehend von Übertragungsinformationen zu bilden, das für Endgeräte (20) bestimmt ist,
- Mittel, die konfiguriert sind, um ein Pilotsignal SP zu bilden,
- Mittel, die konfiguriert sind, um ein Übertragungssignal zu emittieren, welches das Informationssignal SI1 und das Pilotsignal SP umfasst, wobei das Informationssignal SI1 und das Pilotsignal SP auf jeweiligen unterschiedlichen zentralen Frequenzen emittiert werden, die eine vorbestimmte Frequenzabweichung ΔF1 aufweisen.

13. Verfahren (60) zum Empfangen durch ein Endgerät (20) eines Übertragungssignals, das durch ein Zugriffsnetzwerk (30) eines drahtlosen bidirektionalen Kommunikationssystems emittiert wird, wobei das Übertragungssignal ein Pilotsignal und ein Informationssignal SI1 umfasst, das ausgehend von Übertragungsinformationen gebildet wird, für eine Vielzahl von Endgeräten (20) bestimmt ist, wobei das Informationssignal SI1 und das Pilotsignal SP auf jeweiligen unterschiedlichen zentralen Frequenzen emittiert werden, die eine vorbestimmte Frequenzabweichung ΔF1 aufweisen, wobei das Verfahren zum Empfangen umfasst:

- nicht lineares Filtern (61) eines durch das Endgerät (20) empfangenen Signals,
- Suchen (62) nach dem Übertragungssignal ausgehend von einem erhaltenen Signal, nach dem nicht linearen Filtern des empfangenen Signals auf der Frequenz ΔF1, wobei das Übertragungssignal erfasst wird, wenn das erhaltene Signal auf der Frequenz ΔF1 ein vorbestimmtes Erfassungskriterium überprüft,
- Extrahieren (63) der Übertragungsinformationen des erfassten Übertragungssignals.

14. Verfahren (60) nach Anspruch 13, wobei das Extrahieren (63) der Übertragungsinformationen des erfassten Übertragungssignals ausgehend von dem erhaltenen Signal nach dem nicht linearen Filtern auf der Frequenz ΔF1 durchgeführt wird.

15. Endgerät (20) für den Empfang eines Übertragungssignals, das durch ein Zugriffsnetzwerk (30) eines drahtlosen bidirektionalen Kommunikationssystems emittiert wird, wobei das Übertragungssignal ein Pilotsignal und ein Informationssignal SI1 umfasst, das ausgehend von Übertragungsinformationen gebildet wird, für eine Vielzahl von Endgeräten (20) bestimmt ist, wobei das Informationssignal SI1 und das Pilotsignal SP auf jeweiligen unterschiedlichen zentralen Frequenzen emittiert werden, die eine vorbestimmte Frequenzabweichung ΔF1 aufweisen, wobei das Endgerät umfasst:

- Mittel, die konfiguriert sind, um ein nicht lineares Filtern (61) eines von dem Endgerät (20) empfangenen Signals durchzuführen,
- Mittel, die konfiguriert sind, um ausgehend von einem erhaltenen Signal, nach dem Übertragungssignal nach dem nicht linearen Filtern des empfangenen Signals auf der Frequenz ΔF1 zu suchen, wobei das Übertragungssignal erfasst wird, wenn das erhaltene Signal auf der Frequenz ΔF1 ein vorbestimmtes Erfassungskriterium überprüft,
- Mittel, die konfiguriert sind, die Übertragungsinformationen des erfassten Übertragungssignals zu extrahieren.

**Claims**

1. A method (50) for transmitting a broadcast signal, using an access network (30), to a plurality of terminals (20) of a bidirectional wireless communication system, said method (50) comprising:

   - forming (51) an information signal SI1 from broadcast information destined for said terminals (20),
   - forming (52) a pilot signal SP,
   - transmitting (53) a broadcast signal comprising the information signal SI1 and the pilot signal SP, said information signal SI1 and said pilot signal SP being transmitted on different respective center frequencies having a predetermined frequency gap $\Delta$F1.

2. The method (50) as claimed in claim 1, comprising forming another information signal SI2, said information signal SI2 being transmitted on a center frequency having a predetermined frequency gap $\Delta$F2 with respect to the center frequency of the pilot signal SP, the frequency gap $\Delta$F2 being different from the frequency gap $\Delta$F1.

3. The method (50) as claimed in claim 2, wherein the information signal SI2 is formed from the same broadcast information as that of the information signal SI1.

4. The method (50) as claimed in claim 2, wherein the information signal SI2 is formed from broadcast information different from that of the information signal SI1.

5. The method (50) as claimed in one of claims 2 to 4, wherein the information signal SI1 and the information signal SI2 are formed according to different respective physical layer protocols.

6. The method (50) as claimed in claim 5, wherein the information signal SI1 and the information signal SI2 are formed according to different modulations.

7. The method (50) as claimed in one of the preceding claims, wherein the respective center frequencies of the pilot signal SP and of each information signal vary over time, the frequency gap between the center frequency of the pilot signal SP and the center frequency of each information signal being constant over time.

8. The method (50) as claimed in one of the preceding claims, wherein the pilot signal SP is a sinusoidal signal.

9. The method (50) as claimed in one of the preceding claims, wherein the frequency gap $\Delta$F1 is less than 10 kilohertz, preferably less than 1 kilohertz.

10. The method (50) as claimed in one of the preceding claims, wherein the information signal SI1 is ultra-narrowband.

11. A base station (31) for transmitting a broadcast signal to a plurality of terminals (20) of a bidirectional wireless communication system, the base station comprising:

    - means configured to form an information signal SI1 from broadcast information destined for the terminals (20),
    - means configured to form a pilot signal SP,
    - means configured to transmit a broadcast signal comprising the information signal SI1 and the pilot signal SP, said information signal SI1 and said pilot signal SP being transmitted on different respective center frequencies having a predetermined frequency gap $\Delta$F1.

12. An access network (30) for transmitting a broadcast signal to a plurality of terminals (20) of a bidirectional wireless communication system, the access network comprising:

    - means configured to form an information signal SI1 from broadcast information destined for the terminals (20),
    - means configured to form a pilot signal SP,
    - means configured to transmit a broadcast signal comprising the information signal SI1 and the pilot signal SP, said information signal SI1 and said pilot signal SP being transmitted on different respective center frequencies having a predetermined frequency gap $\Delta$F1.

13. A method (60) for receiving, using a terminal (20), a broadcast signal transmitted by an access network (30) of a bidirectional wireless communication system, said broadcast signal comprising a pilot signal and an information signal SI1 formed from broadcast information destined for a plurality of terminals (20), said information signal SI1 and said pilot signal SP being transmitted on different respective center frequencies having a predetermined frequency gap $\Delta$F1, said reception method comprising:

- non-linear filtering (61) of a signal received by the terminal (20),
- searching (62) for the broadcast signal on the basis of a signal obtained, after non-linear filtering of the received signal, on the frequency $\Delta$F1, the broadcast signal being detected when said signal obtained on the frequency $\Delta$F1 satisfies a predefined detection criterion,
- extracting (63) the broadcast information from the detected broadcast signal.

14. The method (60) as claimed in claim 13, wherein the extraction (63) of the broadcast information from the detected broadcast signal is performed on the basis of the signal obtained, after non-linear filtering, on the frequency $\Delta$F1.

15. A terminal (20) for receiving a broadcast signal transmitted by an access network (30) of a bidirectional wireless communication system, said broadcast signal comprising a pilot signal and an information signal SI1 formed from broadcast information destined for a plurality of terminals (20), said information signal SI1 and said pilot signal SP being transmitted on different respective center frequencies having a predetermined frequency gap $\Delta$F1, said terminal comprising:

- means configured to perform non-linear filtering (61) of a signal received by the terminal (20),
- means configured to search for the broadcast signal on the basis of a signal obtained, after non-linear filtering of the received signal, on the frequency $\Delta$F1, the broadcast signal being detected when said signal obtained on the frequency $\Delta$F1 satisfies a predefined detection criterion,
- means configured to extract the broadcast information from the detected broadcast signal.

**Fig. 1**

| 51 — Formation d'un signal d'information SI1 | 52 — Formation d'un signal pilote SP |

Emission d'un signal de diffusion comportant le signal pilote SP et le signal d'information SI1 — 53

50 —

**Fig. 2**

**Fig. 3**

Formation d'un signal d'information SI1

Formation d'un signal pilote SP

Formation d'un signal d'information SI2

Emission d'un signal de diffusion comportant le signal pilote SP et les signaux d'information SI1 et SI2

**Fig. 4**

signal pilote SP

signal d'information SI1

signal d'information SI2

Signal de diffusion SD

fréquence

FP    FI1    FI2

**Fig. 5**

Filtrage non linéaire

-62-    620

621

Extraction des informations de diffusion

**Fig. 6**

## RÉFÉRENCES CITÉES DANS LA DESCRIPTION

**Documents brevets cités dans la description**

*   WO 2015043779 A1